# EUROPEAN PATENT APPLICATION

(11) **EP 4 418 559 A1**
(43) Date of publication of application: **21.08.2024**
(21) Application number: 23157374.2
(22) Date of filing: 17.02.2023
(51) Int. Cl.: H04B 7/155

(54) **COMMUNICATION DEVICE AND SCHEDULING NODE APPLYING NETWORK-CONTROLLED REPEATER RECONFIGURATIONS**

(71) Applicant: Panasonic Intellectual Property Corporation of America, Torrance, CA 90504 (US)
(72) Inventor: SHARIATMADARI, Hamidreza, 63225 Langen (DE); ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication device, a scheduling node, and communication methods for a communication device and a scheduling node. The communication device comprises a transceiver which, in operation, receives control signaling indicating a relay transmission configuration and circuitry which, in operation, determines whether a radio link is operable. If the circuitry determines the radio link to be operable, the transceiver, in operation, receives signals to be relayed and transmits the received signals using the relay transmission configuration. If the circuitry determines that a radio link failure has occurred, the circuitry, in operation, performs radio link recovery, and the transceiver, in operation receives the signals to be relayed and transmits the received signals using the relay transmission configuration after successful radio link recovery.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates efficient operation of a relay node, in particular decreasing signaling overhead associated with reconfiguration of communication devices including a relay node.

In an embodiment, the techniques disclosed here feature an apparatus (e.g. communication device, in particular a relay apparatus). The apparatus comprises a transceiver which, in operation, receives control signaling indicating a relay transmission configuration and circuitry which, in operation, determines whether a radio link is operable. If the circuitry determines the radio link to be operable, the transceiver, in operation, receives signals to be relayed and transmits the received signals using the relay transmission configuration. If the circuitry determines that a radio link failure has occurred, the circuitry, in operation, performs radio link recovery, and the transceiver, in operation receives the signals to be relayed and transmits the received signals using the relay transmission configuration after successful radio link recovery.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a block diagram illustrating the functional communication structure of a relay node in a communication system in which the node relays signals between a base station and a UE;
- **Fig. 7A**: illustrates a relay transmission configuration before radio link recovery;
- **Fig. 7B**: illustrates a relay transmission configuration after radio link recovery;
- **Fig. 8**: is a block diagram illustrating a communication device and a scheduling node;
- **Fig. 9**: is a block diagram illustrating circuitry of a communication device;
- **Fig. 10**: is a flow chart illustrating steps of a communication method for a communication device;
- **Fig. 11**: is a flow chart illustrating steps of a communication method for a scheduling node;
- **Fig. 12A**: illustrates a relay transmission configuration before radio link recovery;
- **Fig. 12B**: illustrates a relay transmission configuration after radio link recovery;
- **Fig. 13**: is a flow chart illustrating steps of a communication method for a communication device;
- **Fig. 14**: illustrates a time threshold for radio link recovery;
- **Fig. 15**: illustrates release of a relay transmission configuration;
- **Fig. 16**: is a block diagram illustrating circuitry of a scheduling node; and
- **Fig. 17**: is a flow chart illustrating steps of a communication method for a scheduling node.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

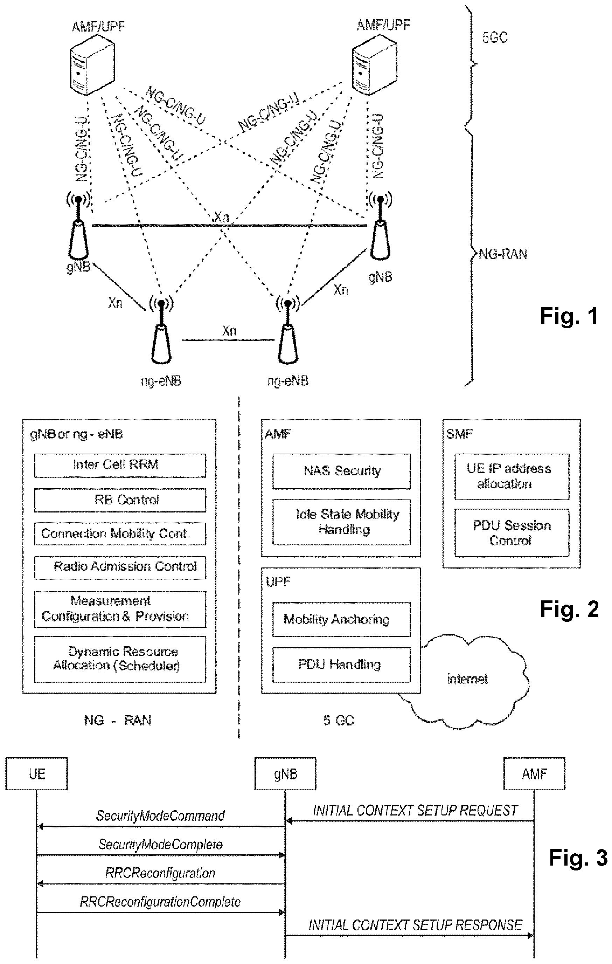

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology are summarized in 3GPP TS 38.211, v 15.7.0.

### 5G NR functional split between NG-RAN and 5GC

Fig. 2 illustrates functional split between NG-RAN and NGC or 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or CAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

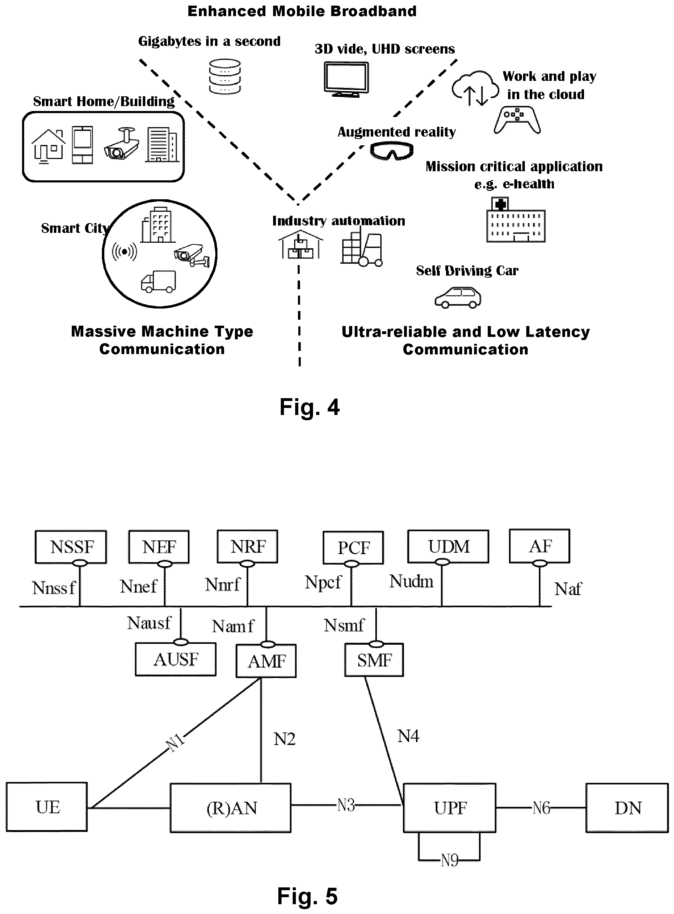

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block*" (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the disclosure and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE)***. This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Relay Node

The term "***relay***" or "***relay node***" refers to a general node (in a communication system) or any communication device that is used to receive signals from one entity, amplify them and transmit them to another entity.

In other words, a relay may be any device controlled by a first entity (in the following usually assumed to be a base station/scheduling device/scheduling node/gNB) to relay signals between said first entity and a second entity (in the following usually assumed to be a UE). However, while a relay herein is described as amplifying signals between a base station (network node, scheduling device) and a user equipment, the relay of the present disclosure may be also used to amplify signals e.g. between two user equipments. In particular, a relay may be a UE, a base station (e.g. a gNB), an NCR, or an Integrated Access Backhaul (IAB).

For instance, a relay may be a RF (radio frequency) repeater, which does not perform baseband L1 processing such as demodulation and decoding or (H)ARQ, but merely receives, amplifies and re-sends the signals. However, the present disclosure is not limited thereto as the relay may also be a smart repeater, which performs demodulation, decoding, and/or error correction on signals before relaying them. In particular, the signal received by the relay from one entity that is to be relayed to another entity and the corresponding signal the relay transmits to said other entity may be identical (up to amplification) or may be different (e.g. in terms of modulation, but also e.g. due to error correction). Here, it should be noted that, in the present disclosure, (i) signals/transmissions received by the relay from one entity that are to be relayed to another entity are also referred to as *"signals*/*transmissions to be relayed",* and (ii) signals/transmissions of the relay node in which the relay relays a signal/transmission to be relayed as "***relay(ing) signals*/*****transmissions**".* In general, Transmissions to be relayed may be (i) received from the gNB or (ii) be transmission received from said other entity and to be relayed to the gNB; and relay transmission may be (i) transmissions transmitted to the gNB or (ii) be transmission towards said other entity. Furthermore, it is noted that the present disclosure is applicable to relay irrespectively of its layer (RF, L1, L2, L3, etc), applicable frequency band, domain of multiplexing or the like.

In general, relay nodes serve for extending the coverage in a cell and/or to improve performance on a cell edge while enabling cost reduction in comparison with increasing the number of base stations (network nodes). In the downlink, a relay node may receive signals from a network node (e.g. a scheduling device or base station) in downlink, amplifies them, and transmits them further e.g. to one or more terminals. In the uplink, the relay node may receive signals from said one or more terminals, amplifies them, and transmits them further to a network node (e.g. a base station). Thus, a relay node may have a plurality of radio access interfaces, in particular:
- an interface for radio access with a UE (also referred to as access link),
- an interface for radio access with a base station (also referred to as backhaul link), and/or
- an interface for sending control information to and/or receiving control information from the base station (also referred to as C-link).

Conceptually a relay node can be implemented in any layer (e.g., RF, L1, L2, or L3). However, for the sake of efficiency and cost reduction, a more simple repeaters on physical layer may be desirable.

LTE relaying was different to the use of a repeater which merely re-broadcasts (as an RF relay does) signals and was thus less cost-efficient. For example, a L2 relay in LTE actually received, demodulated and decoded the data, applied any error correction, etc to it and then retransmitted a new signal. In this way, the signal quality could be enhanced with an LTE relay, rather than suffering degradation from a reduced signal to noise ratio when using a repeater. For an LTE relay, the UEs communicated with the relay node, which in turn communicated with a "donor" eNB. It was possible to have a time division multiplex or frequency multiplex for the links UE-relay and relay-BS. Some other relay options have been provided, none of which supported beamforming. The LTE relaying concept has not been widely adopted.

The 3GPP has recently defined a study item followed by a work item for network-controlled repeaters (NCR) in new radio, rel. 18 (cf. 3GPP RP-213562, "New SI: Study on NR Smart Repeaters", RAN#94e, Dec. 2021, available freely at www.3gpp.org). Accordingly, a relay may be a repeater that can extend the network coverage and is supposed to be more cost efficient compared to the Integrated Access and Backhaul (IAB) that was introduced in Rel. 16.

One of the desirable features of network-controlled repeaters is the ability of beamforming. The LTE repeaters were designed to work in sub-3 GHZ bands, in which beam forming is not required [TS 36.106]. This is one of key difference between the network-controlled repeaters and the LTE repeaters. The network-controlled repeater should support both outdoor and indoor scenarios.

Objectives of a work item, "Revised WID on NR network-controlled repeaters" RP-22350, 3GPP TSG RAN Meeting #98-e, December 2022, available freely at 3gpp.org) for the network-controlled repeaters follow recommendations in the specification TR 38.867 and include the following features. Network-controlled repeaters are inband RF repeaters and are to be used for extension of network coverage on FR1 and FR2 bands. The repeaters should be only single hop stationary smart repeaters that are to be transparent to UEs. In other words, there would be the signal paths gNB->sRelay->UE and UE->sRelay->gNB only (sRelay here referring to a smart relay, a smart repeater, or network-controlled repeater used in these examples exchangeably). The network controlled repeaters should be capable of maintaining the gNB-repeater link and repeater-UE link simultaneously. Cost efficiency should be considered.

The concepts that may need to be studied include identifying which side (control) information would be necessary or desirable for the smart repeaters for controlling the NCR's radio unit, NCR-Fwd. The side information may include beamforming information, timing information to align transmission/reception boundaries, information on uplink and downlink TDD configuration and operation, ON-OFF information for efficient interference management and improved energy efficiency, power control information for interference management, and/or the like. ON-OFF indicates at which instances the relaying should be performed. The power control adjusts the transmission power of relaying at each instance.

Furthermore, the control plane signaling and procedures will need to be specified, wherein down-selection of the following options from section 7.2 of 3GPP TR 38.867 (Study on NR network-controlled repeaters, see V18.0.0, September 2022, freely available at 3gpp.org) is needed. For the configuration of signaling, the NCR-MT can obtain the necessary configuration for receiving the L1/L2 signaling of the side control information. The necessary configuration may be from RRC, from OAM (Operations Administration and Maintenance) or hard-coded, or partially configured by RRC and partially configured by OAM or hard-coded.

The configurations from RRC and/or OAM (or hard-coded) may contain the configurations of PHY channels to carry the L1/L2 signaling including the configurations for receiving PDCCH and PDSCH and, if needed, configurations for transmitting PUCCH and/or configurations for transmitting PUSCH. The configurations from RRC and/or OAM (or hard-coded) may further contain the configurations of L1/L2 signaling including configurations for DCI and, if needed, for UCI (uplink control information) and/or for MAC CE (MAC control element). The parameters in the necessary configurations for L1/L2 signaling may be based on the existing parameters for PDCCH, PDSCH, PUCCH, PUSCH, DCI, UCI and MAC CE, e.g. from Release 17.

As mentioned above, the amplify-and-forward (AF) relays (RF repeaters) were also possible for LTE. Such relay is transparent in the system, it amplifies the received signal and forwards it to users. The relay itself does not know whether the amplified signal is a desired signal received from the UE/gNB, or whether it is merely an interference or noise. Hence, the relay may increase the inference in the system if it is not configured/deployed properly. The LTE RF repeater has been designed to work in sub-3 GHz bands, in which beam forming was not required (cf. 3GPP TS 36.106, "Evolved Universal Terrestrial Radio Access (E-UTRA); FDD repeater radio transmission and reception", version 17.0.0 available freely at www.3gpp.org). However, the network-controlled repeaters, considered for Rel. 18, are supposed to work in both FR1 and FR2, with the possibility of beamforming. Hence, additional considerations should be taken for their design.

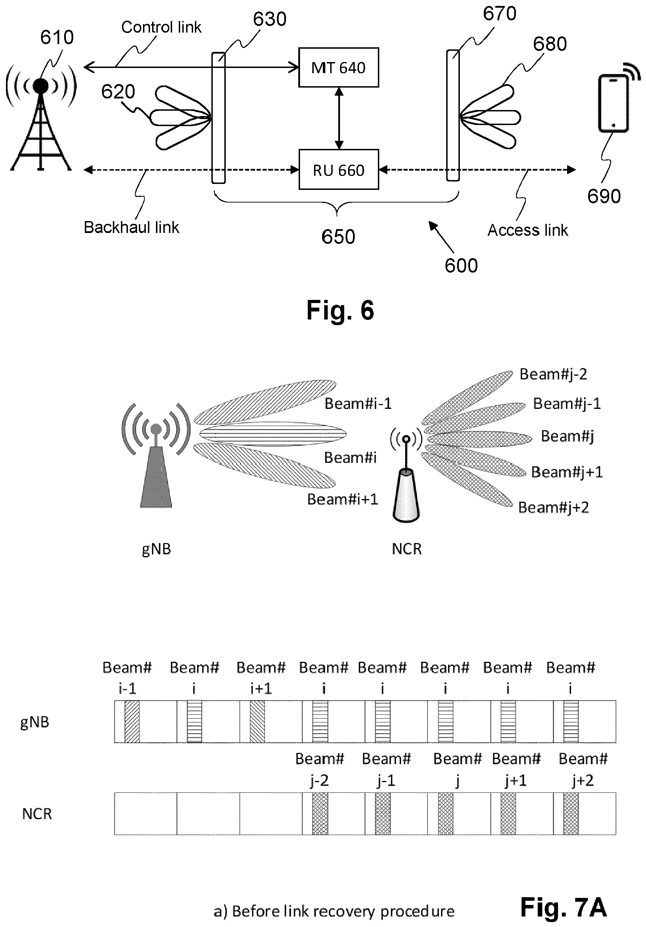

**Fig. 6** shows an exemplary design of a communication system 600 including a relay 650, which may be a network-controlled repeater (NCR) as envisaged currently for the NR. The relay 650 includes, as functional units, a mobile termination section 640 (also referred to as mobile terminal or MT) and a radio unit (RU) section 660. The MT section 640 may receive control signals/information from a network node (gNB) 610 and configure the RU section 660 accordingly.

The relay 650 may also send information to the gNB 610. It is noted that the MT section 640 (which may be similar to a UE in its functionality) may use the channels described above (e.g. in Section "Downlink control channel monitoring, PDCCH, DCI" or others) to communicate with the gNB. The RU section 660 is responsible for receiving and amplifying the signal (including data and/or control information), received from the gNB 610 and/or one or more (serving) UE(s) such as the UE 690 illustrated in the figure. In NR, the term currently used for the MT section is NCR-MT, and the term currently used for the RU section is NCR-Fwd (Fwd for forwarding).

In Fig. 6, the relay 650 also includes a transceiver which is illustrated by way of a first transceiver portion 630 that transmits signals/transmission 620 towards the gNB 610 or receives signals 620 from the gNB 610 (and possibly further gNBs) and a second transceiver portion 670 that transmits signals 680 towards one or more UEs 690 or receives signals 680 from one or more UEs 690. As indicated, the transmissions/signals may be transmitted/received through beams (e.g. may be directional transmission). However, the present disclosure is not limited thereto.

As also indicated in Fig. 6, in particular in NR, the link between the gNB (i.e., the device controlling the relay) and the MT for receiving/sending control information is also referred to as Control Link or C-link, the link between the gNB and RU for receiving/forwarding signals is referred to as Backhaul Link, and the link between the RU and the UE receiving/forwarding signals is referred to as Access Link.

Examples of control information for the NCR, which are delivered over the NCR control link, are control signals for ON-OFF, power control, beam patterns or beam information, and TDD UL/DL configurations. Dynamic, periodic, and semi-static indications could be supported.

Regarding the TDD UUDL configuration, flexible symbols could be supported by the NCR, e.g. the gNB could configure flexible slots/symbols dynamically or semi-statically (i.e., the gNB could send indications to the NCR indicating whether a flexible symbol/slot is a DL or a UL symbol/slot dynamically or semi-statically). Dynamic and semi-static indications both could be supported. In general, the NCR could also be configured to not amplify signals over flexible slots/symbols.

It is further noted that Fig. 6 illustrates an exemplary functional communication structure of the relay. In general, there may be one transceiver unit that handles the transmission and/or reception from/to any entity. Such transceiver may include a plurality of antennas and amplifiers and, possibly, further circuitry for effectuating transmission and reception of signals. The transceiver may include more than one transmission and/or reception portions so that simultaneous transmission and reception to one or more communication peers is possible.

### Beam failure

Under normal operating conditions, a 5G NR UE is able to switch between beams as radio conditions change overtime. In particular, a UE can switch between beams by reporting CSI Reference Signal Resource Indicator (CRI) or SS (Synchronization Signal) /PBCH Block Resource Indicator (SSBRI), which provide the base station with information regarding the preferred beam at any point in time.

However, when radio conditions change suddenly, a UE can experience Beam Failure. In an exemplary procedure for recovering the connection with a minimum delay, detection of Beam Failure, selection of a new beam and recovering of the connection are performed in the PHY and MAC layers without any higher layer signaling.

In particular, the PHY layer uses a quality threshold *Q_{out_LR}* to trigger failure indications to the MAC layer. When the radio link quality belonging to the monitored reference signals is worse than the threshold, the PHY layer indicates a Beam Failure Instance. The MAC layer maintains a counter of reported Beam Failure instances and detects Beam Failure if the counter of beam failure instances exceeds a counter threshold, e.g. *beamFailurelnstanceMaxCount,* within a upon expiry of a timer defined by *"beamFailureDetectionTimer"* information.

When the Beam Failure has been detected, the UE recovers by initiating a Random Access procedure. The UE measures RSRP (reference signal received power) of a candidate beam or beams before selecting a beam for recovery. For more details on Beam Failure Detection, see C. Johnson, 5G New Radio in Bullets, 1^{st} edition, section 13.9.1 incorporated herein by reference.

For instance, a UE or NCR detects the beam failure if the measured RSRP level of a connected beam goes below a threshold. If a predefined number of Beam Failure is detected, the Beam Failure Recovery Process using Physical Random Access Channel (PRACH) is triggered with the candidate beam.

### Radio Link Failure

Under normal operating conditions, a 5G NR UE maintains its connection towards a primary serving cell and completes a handover to change the primary serving cell when necessary. If a handover procedure fails or if a handover procedure is not initiated when required, a UE can experience Radio Link Failure. Possible reasons for Radio Link Failure include congestion at the target cell, a change in radio conditions, a missing neighbor relationship, a triggering threshold that initiates the handover procedure too late, or an inability to complete inter-system handover (e.g. from 5G to LTE) when 5G coverage becomes weak.

In an exemplary procedure for detecting Radio Link Failure, the PHY layer generates *Out-of-Sync* and *In-Sync* indications. In particular, an Out-of-Sync indication is generated when a link quality belonging to all monitored reference signals is worse than a quality threshold *Qₒᵤₜ*, and an In-Sync indication is generated when the signal quality of at least one monitored reference signal is better than a quality *Qᵢₙ*.

In-Sync and Out-of-Sync indications are forwarded to the RRC layer, which uses these indications in combination with a timer T310 and counters N310 and N311, which are RRC configured or received in SIB1 (System Information Block 1). In particular, timer T310 is started when N310 consecutive Out-of-Sync indications (without In-Sync indication in between) have been forwarded. For instance, N310 = 3 and N311 = 2. The timer T310 is stopped and reset when N311 consecutive In-Sync indications have been forwarded. Radio Link Failure is detected when timer T310 expires.

If Radio Link Failure is detected at the Primary serving cell, Security Mode procedure and Data Radio Bearers have been setup, the UE initiates RRC connection Re-establishment procedure to recover its connection, which includes initiating Random Access procedures and sending a reestablishment request *RRCConnectionReestablishmentRequest or RRCReestablishmentRequest.* If Radio Link Failure is detected at the Primary serving cell, and Security Mode procedure or at least one Data Radio Bearers has been setup, the UE releases itself to RRC Idle. For more details on Radio Link Failure, see C. Johnson, 5G New Radio in Bullets, 1^{st} edition, section 13.9.2 incorporated herein by reference.

Similarly to the above described link failure detection at the UE, link failure detection is also performed by a NCR device for its links, e.g. including the control link. Link failure detection may be performed by the NCR e.g. by counting instances of out-of-sync indications, link failure instances, or, in beamforming operation, beam failure instances, and comparing counters with a configured threshold such as *beamFailurelnstanceMaxCount.*

In case of a link failure, an NCR may have to release its configurations. "Releasing the configuration" may include ceasing to perform the relaying and informing the serving gNB that the configuration is released. When configurations are released, the NCR would not perform the relaying. The gNB needs to reconfigure the NCR again. An NCR may be configured semi-statically by RRC signaling.

### Further Modifications

As mentioned above, a gNB can configure the NCR with a periodic, semi static or dynamic configurations through the control link. A periodic configuration can be applied, for instance, for certain beam patterns and (or can pertain to SSB transmissions of CSI-RS transmissions, and a dynamic configuration may be configured for scheduling of UEs.

However, the inventors have realized that disruption to the control link between NCR and gNB might occur that will trigger a link recovery procedure at the NCR, similar to the link recovery procedure described above for the UE. Parameters triggering the link recovery procedure may be RRC configured, for example the number of beam failure instances (BFI), Radio Link Failure instances, and/or out-of-sync measurements. Those parameters and possibly the ability of the NCR-MT to identify a new working beam, may determine the delay incurred to recover the control link after failure.

Control link failure may lead to the NCR releasing the above (relay) transmission configurations, e.g. beam configurations. The NCR then needs to be reconfigured, resulting in an increase in signaling overhead. However, as the inventors have noted, after the control link is recovered due to a link failure recovery mechanism, the NCR will most likely be configured with some of the previous configurations, e.g., periodic beam patterns.

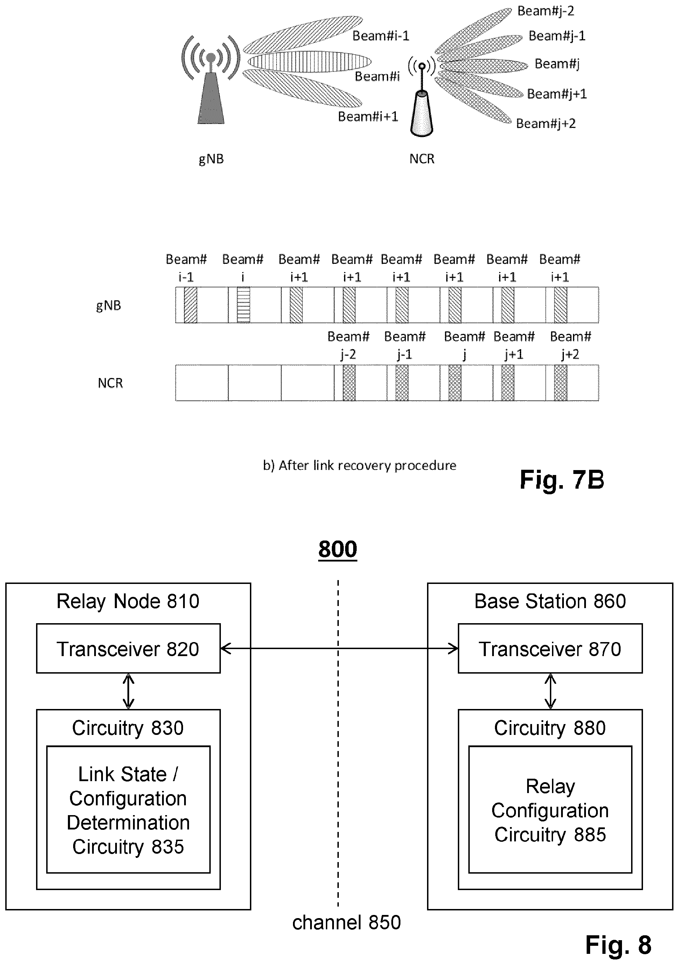

An example is shown in **Fig. 7A** and **Fig. 7B**, where the NCR is initially served by the gNB with Beam#i, as shown in **Fig. 7A**. After the link recovery procedure, as shown in **Fig. 7B**, the NCR is served with the same gNB through Beam#i+1. The same periodic beam patterns for the NCR for serving the UE, are used both before radio link recovery and after radio link recovery. Periodic time patterns are shown in the bottom parts of the figures, where beams are served e.g. within one or more respective symbols of slots. Here, the NCR serves the UE on beams j-2 to j+2 while simultaneously being served by the gNB on beam i before recovery and i+1 after recovery.

### Embodiments

The inventors have identified the possibility of deriving the NCR device reconfiguration from the existing transmission configuration in the event of a control link failure between NCR and gNB, e.g. due to radio link failure. The present disclosure relates to different solutions and variants for such procedures. Accordingly, the present disclosure provides techniques for increasing the efficiency of a communication system comprising a relay node, e.g. decreasing signaling overhead associated with reconfiguration.

The present disclosure in particular provides scheduling devices, corresponding methods for scheduling devices, communication devices (e.g. adapted/configured to perform the function of a relay node in a communication system), corresponding methods and (computer) programs (e.g. stored on a memory) for communication devices, communications systems comprising such scheduling devices and communication devices, as well as integrated circuits which, in operation, control a processes of scheduling devices/communication devices to perform the respective methods.

An example of such communication system is illustrated in **Fig. 8**. The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 8** illustrates a general, simplified and exemplary block diagram of a communication device 810 (here exemplarily assumed to be a relay node) and a scheduling device 860 or scheduling node (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory. The communication device 810 is assumed to be able to function as a relay between the base station and another communication device.

As illustrated in **Fig. 8****,** the communication device 810 and the scheduling device 860 (eNB/gNB) may communicate with each other over a (wireless) physical channel 850 respectively using their transceivers 820 (relay node side) and 870 (base station side). Together, the scheduling device 860 and the relay node 810 form the communication system 800. The communication system 800 may further include other entities such as those shown in Fig. 1 and, in particular said other communication device towards which the relay node relays signals from the base station and/or from which the relay node receives signals to be relayed to the base station.

### Transceiver & Circuitry

As illustrated in **Fig. 8** (left-hand side), the communication device may comprise a transceiver and circuitry (or processing circuitry), and the scheduling device may comprise a transceiver and a (processing) circuitry.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term "***circuitry***" herein refers to any hardware and/or software. For example the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 810 as e.g. illustrated in **Fig. 8** (left-hand side) is provided. The communication device 810 comprises a transceiver 820 and circuitry 830. The transceiver 820, in operation, receives control signaling indicating a relay transmission configuration. The circuitry 830, in operation, determines whether a radio link is operable. If, in the circuitry 830 determines that the radio link is operable, the communication device 810 performs relaying of signals, wherein the transceiver 820, in operation, receives signals to be relayed and transmits the received signals to be relayed using the relay transmission configuration. If the circuitry 830 determines, in the determination whether the radio link is operable, that a radio link failure has occurred, the circuitry 830, in operation, performs radio link recovery. After successful radio link recovery, the transceiver 820, in operation, receives the signals to be relayed and transmits the received signals using the relay transmission configuration.

The circuitry 830 is exemplarily considered to include link state and configuration determination circuitry 835, which determines whether the radio link is operable or whether a radio link failure has occurred. It is, however, noted that the circuitry 830 may implement more functionality than the determining of the above-mentioned relay transmission configuration(s) and of the operability of the radio link, as it may, for instance, further control the transceiver 820. In particular, circuitry 830 may control the transceiver 820 to perform the relaying transmission of signals, to transmit or receive transmissions of control signaling.

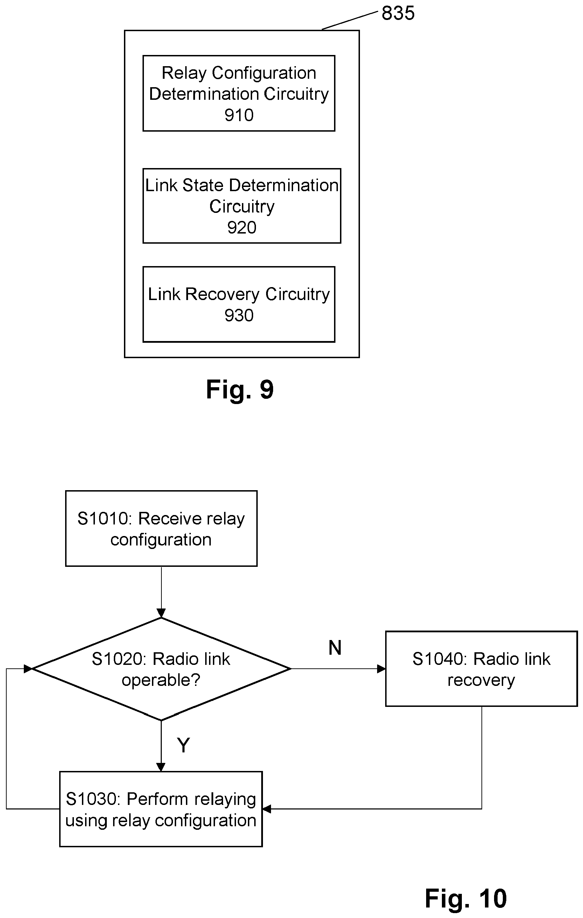

Fig. 9 shows exemplary structure of link state and configuration determination circuitry 835. As shown, exemplary link state and configuration determination circuitry includes relay configuration determination circuitry 910, link state determination circuitry 920, and link recovery circuitry 930. The relay configuration determination circuitry 910 may be responsible for determining the relay transmission configuration, e.g. based on the received control signaling. The link state determination circuitry 920 may be responsible for determining whether the radio link is operable, e.g. determining radio link failures. The link recovery circuitry 930 may be responsible for performing radio link recovery in case a radio link failure has been detected.

It is, however, noted that the circuitries 830, 835, 910, 920, and 930 may implement more functionality than the determining of the above-mentioned relay transmission configuration(s) and of the operability of the radio link, as it may, for instance, further control the transceiver 820. In particular, circuitry 830 may control the transceiver 820 to perform the relaying transmission of signals, to transmit or receive transmissions of control signaling. For instance, a circuitry may be configured to for determine resources for transmission/reception of data, in particular the resources for relaying transmission and transmissions of control signaling. In particular, the time (e.g. start, end, and/or length) of transmissions may be determined by a circuitry. For instance, the transceiver 820 may receive signaling including an indication indicating resources for transmission(s) (e.g. a scheduling DCI), a circuitry may obtain said indication from the signaling, and the relay may determine the resources based on the obtained indication.

In correspondence with the above described communication device, a communication method to be performed by a communication device is provided. As shown in **Fig. 10**, the method comprises a step S1010 of receiving a transmission configuration. The method further comprises step S1020 of determining whether a radio link is operable or whether a radio link failure has occurred. If, in step S1020, it is determined that the radio link is operable, a relaying step S1030 is performed. Step S1030 includes receiving signals to be relayed and transmitting the received signals using the relay transmission configuration. It is noted that steps S2020 of checking the radio link and relaying step S1030 are performed repeatedly and continuously as long as no radio link failure occurs, and are not limited to the order given in the above description. If, in step S1020, it is determined that a radio link failure has occurred, step S1040 of performing radio link recovery. After successful radio link recovery, the method moves to relaying step S1030 of receiving signals to be relayed and transmitting the relayed signals.

Also provided is a scheduling node 860 or scheduling device, e.g. a base station as illustrated e.g. in **Fig. 8** (right-hand side). The scheduling node 860 comprises a transceiver 870 and circuitry 880. The transceiver 870, in operation, generates a relay transmission configuration. The transceiver 870, in operation, transmits control signaling including the relay transmission configuration.

The transceiver may transmit signals to be relayed and/or receives relayed signals in accordance with the relay transmission configuration.

The circuitry 880 of the scheduling node is exemplarily considered to include relay configuration circuitry 885, as illustrated in **Fig. 8**.

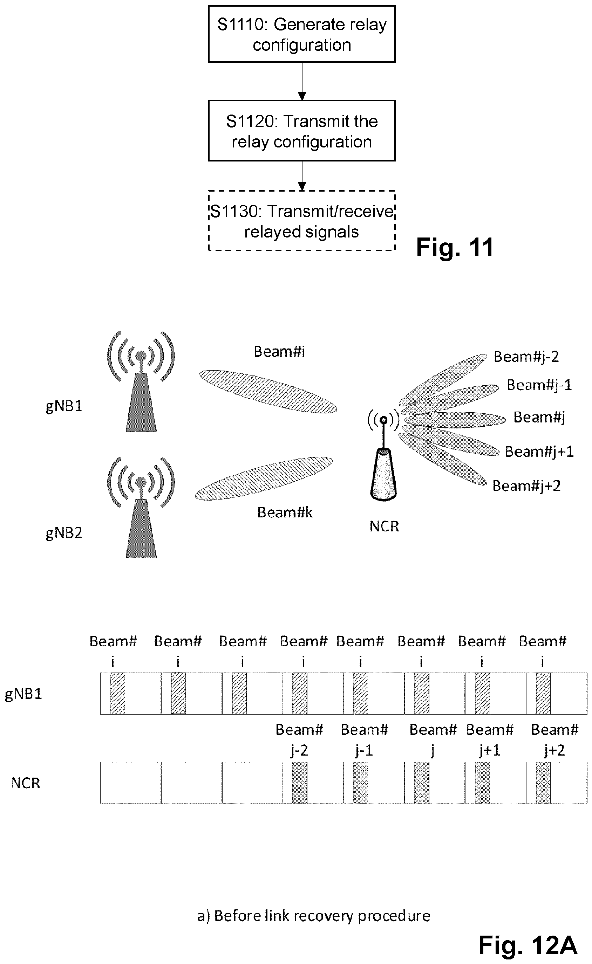

In correspondence with the scheduling node 860, provided is a communication method to be performed by a scheduling node. As shown in **Fig. 11**, the method includes a step S1110 of generating a relay transmission configuration, a step S1120 of transmitting control signaling including the relay transmission configuration.

The communication method for a scheduling node may further comprise a step S1130 of transmitting signals to be relayed and/or receiving relayed signals in accordance with the relay transmission configuration.

In the following, the expressions "NCR" and "gNB" are used to easily distinguish between the components of the communication apparatus 810 and scheduling node 850 or the above-mentioned methods for the same, e.g. "NCR transceiver 820", "gNB circuitry 880", or "NCR method". However, these expressions and names are exemplary and do not limit the present disclosure to any standard or technology.

Furthermore, in the present disclosure, details, embodiments and, examples, e.g. as described in the following, apply to both the communication apparatus 810 and the scheduling node 860 alike, as well as for the apparatuses and methods disclosed above.

As described above, it is determined in step S1020, e.g. by NCR circuitry 830, whether a radio link is operable. Such a radio link may correspond to a link between the scheduling node 860 and the communication apparatus 810, and may include a serving beam on which the communication apparatus 810 is served by the scheduling node 860. For instance, the radio link may include a control link illustrated in **Fig. 6**.

Furthermore, the determination as to whether the radio link is operable may be similar to the above-described determinations and detections for Radio Link Failure of Beam Failure, e.g. beam failure detection (BFD) and radio link monitoring (RLM). In particular, a link failure may be detected if a number of link failure detections, beam failure detections, or out of sync measurements exceeds a threshold. Moreover, link recovery may be performed similarly to the link recovery and beam recovery mechanisms described above. In multi-beam operation, link recovery may include identification of a new working or serving beam.

Moreover, receiving and transmitting of signals to be relayed corresponds to the relaying functionality performed a relaying communication apparatus such as an NCR, e.g. including receiving and amplifying signals between the gNB and the serving beams, e.g. using RU section 660 (NCR-Fwd) shown in Fig. 6.

In the present disclosure, "using the relay transmission configuration" or transmitting and receiving signals "in accordance with the relay transmission configuration" refers to applying at least one configuration or parameter from the relay transmission configuration when transmitting or receiving relayed signals or signals to be relayed.

"Signals to be relayed" may include a plurality of signals transmitted and/or received a different time instances, e.g. before and after radio link recovery, possibly conveying the same or different data.

The relayed signals may include one or both of uplink signals and downlink signals, and may include sidelink. Furthermore, the signals to be relayed may convey control data and/or user data or payload data. The present disclosure refers to "signals to be relayed" to comprise any data. The relaying communication apparatus 810 need not read out and process data from the signals to be relayed, as it serves as a relaying node for signals, e.g. between scheduling node and UE.

The relay transmission configuration may include or indicate one or more configurations out of the following:
- a beamforming configuration,
- a configuration of time division duplex (TDD) operation of an uplink and a downlink, or
- on-off information indicating when the relay transmission operation of the communication device is to be turned on and off, or
- power control information.

Beamforming information may indicate a time pattern which defines which beams are served in which time instances, such as slots or symbols. For instance, the beam pattern may be a periodic beam pattern. Beams or radio beams are directions used in directional transmission where the transmission power is concentrated. For instance, in 5G NR, in control signaling, different beams may be represented by TCI (Transmission Configuration Indicator) states.

The relay transmission configuration may be RRC configured. For instance, the NCR may be configured with a semi-static configuration for a transmission to or from a UE (e.g. SPS (semi-persistent scheduling) or CG (configured grant) transmission).

A configuration of TDD operation may include a slot configuration which associates the symbols within a slot with a symbol type out of uplink symbols, downlink symbols, flexible symbols, and, in communication systems where applicable, sidelink symbols.

As mentioned above, ON-OFF information may be used for efficient interference management and improved energy efficiency, and power control information may be used for interference management.

By using or reusing the relay transmission configuration after successful radio link recovery, the present disclosure facilitates reducing signaling overhead for signaling a new transmission configuration or parameter for a new transmission configuration.

### Configuration defined for set of cells

As described above, the relaying communication device 810 such as NCR performs relaying of signals after successful radio link recovery using the same relay transmission configuration as before radio link failure.

In some embodiments, a relay transmission configuration, e.g. including above-mentioned parameters or configuration of beamforming, TDD, ON-OFF information, power etc, is defined for a plurality of scheduling nodes, e.g. base stations, gNBs, or cells or transmission and reception points (TRPs). After the (successful) radio link recovery procedure, the existing (e.g. already in use before radio link failure) relay transmission configuration is applied for the defined set of scheduling nodes, cells etc.

After successful radio link recovery, the relaying communication apparatus 810 may be connected to the same scheduling node as before radio link failure or another scheduling node from among the defined set.

For instance, the set for which the configuration is defined may be a plurality of scheduling nodes including a first scheduling node, to which the communication device 810 is connected before radio link failure, and a second scheduling node to which the communication apparatus connects in the radio link recovery procedure. When, in performing the radio link recovery, the communication device 810 connects to the second scheduling node, the NCR transceiver 820, in operation, receives the signals to be relayed and transmits the received signals using the relay transmission configuration after the successful radio link recovery. Correspondingly, in NCR method step S1030, after connecting to the second scheduling node in the radio link recovery, the relaying is performed using the (existing) relay transmission configuration.

For instance, the transmission configuration for the NCR 810 (e.g., including beam ON-OFF information, power, and/or UL-DL TDD configurations) is defined for a set of serving gNBs, cells, TRPs. When the radio link failure happens, the NCR stops amplifying the signals and initiates the link recovery procedure. When the link is recovered to the set of gNB/cells, the NCR applies the existing defined transmission configurations.

In the case of multi-TRP communication, the relaying communication apparatus 810 may apply the defined transmission configurations for a first plurality of TRPs and for a second plurality of TRPs before and after radio link recovery.

Returning to the example illustrated in **Fig. 7A** **and** **Fig. 7B****,** the NCR is configured with a periodic beam configuration or a periodic beam pattern, e.g. for SSB and/or RS transmissions which are performed periodically in time. A set of gNBs are defined, including the current serving gNB (the "first" scheduling node). When the current serving gNB fails, the NCR performs the link recovery procedure. If the recovered link is with one of the gNBs within the defined set (e.g. again the first scheduling node or another "second" scheduling node), the configured beam configuration is applied again as before the recovery, rather than performing reconfiguration.

### Offset

In connection with the above described embodiments, an example has been described where the same periodic beam pattern is applied before and after radio link recovery without modification. In accordance with some embodiments, offset values are defined for each gNB, cell or TRP. When the NCR connects to a new gNB, cell, or TRP, the associated offset values are applied to the transmission configuration.

For instance, an NCR may be configured or defined with offset (e.g. resource offsets for time, frequency etc.) values for each of the plurality of scheduling nodes (e.g. gNBs), cells, or TRPs. When the radio link failure occurs for the NCR, the NCR initiates the link recovery procedure and may be attached or connected to another gNB, cell, or TRP. In such case, the associated offset values for the other, newly-connected scheduling node are applied to the existing transmission configurations.

In some embodiments, a relay transmission configuration defined for a set or plurality of communication nodes includes, for each of the plurality of scheduling nodes, a respective resource offset. When, in performing the radio link recovery, the communication device 810 connects to the second scheduling node, the NCR transceiver 820, in operation, applies the resource offset for the second scheduling node to the beamforming configuration when transmitting the received signals after the successful radio link recovery.

Correspondingly, in step S1120 of the gNB method, the relay configuration may be generated including respective resource offsets for each of the plurality of scheduling nodes.

In the corresponding communication method, the resource offset is applied in the relaying step S1030 after connecting to a second scheduling node in successful radio link recovery.

An offset or resource offset may be defined for one or more parts or parameters of the configuration, such as beam pattern configuration, TDD configuration etc. For instance, in the examples of a beam pattern or TDD information, a time offset, e.g. in slots and/or symbols, may be applied to the time pattern. Other examples of offsets include frequency offset, spatial/directional offset (e.g. beam) etc, or a transmission / reception power offset. Furthermore, if an offset is defined e.g. for the beam configuration, other parts of the relaying configuration, such as ON-OFF or power information, may be unaffected by the offset.

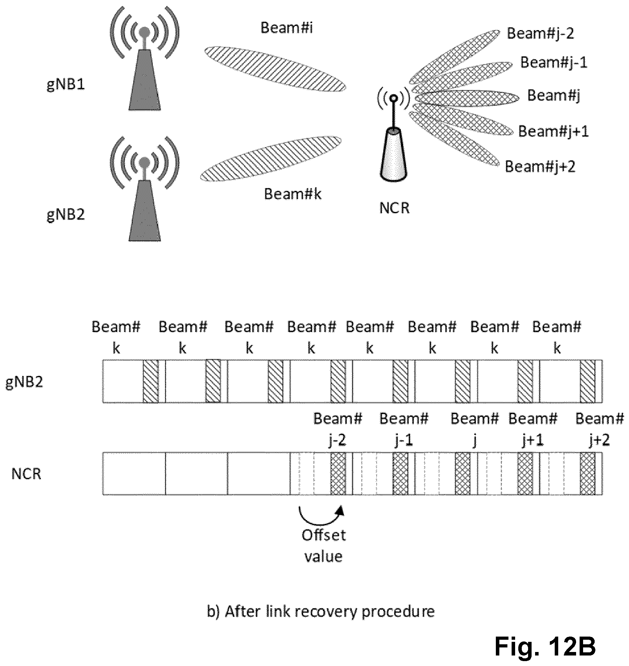

In an example illustrated in **Fig. 12A** and **Fig. 12B****,** the NCR is served by scheduling node gNB1 before the radio link recovery procedure. The NCR is configured with a periodic beam pattern e.g. for SSB/RS transmissions. Offset values for the gNB2 are defined. When the link failure happens for the NCR, the NCR performs the link recovery procedure and connects to gNB2. The NCR applies the offset values for the beam pattern configuration.

As shown in **Fig. 12A** **and** **Fig. 12B****,** the UE may be served on beam#i by gNB1 before radio link recovery and on beam#k after radio link recovery. In both cases, the NCR serves UEs on beams j-2 to j+2 of the configured beam pattern. However, when served by gNB2 on beam#k, the NCR applies a symbol offset (or other time offset) to the beam pattern for beams j - 2 to j+2.

Configuring an offset may facilitate seamless relaying in the case of radio link failure when relaying nodes are used that are transparent to UEs. For instance, a time offset may compensate for different positions of gNBs or TRPs or their distances to the NCR, a frequency offset may compensate for different channel conditions (e.g. in view of simultaneous transmission and reception by the NCR), etc.

### Time threshold for radio link recovery

In some embodiments, which may be combined with the aforementioned examples and embodiments, a relay transmission configuration is set with a time threshold. A relay transmission configuration remains valid for the NCR if the link failure duration is less than the time threshold or counter.

For instance, an NCR may be configured to trigger the link recovery procedure earlier than the UEs served by the NCR, to avoid massive link failures by the UEs. As will be explained further, for this earlier triggering, a smaller value for a parameter or count threshold used in link failure detection or beam failure detection, e.g. *beamFailurelnstanceMaxCount,* may be set for the NCR than for served UEs. If the link recovery procedure happens for the NCR and the NCR recovers in a sufficiently short time instance, the transmission configurations for the UE and the relay transmission configuration may still be used, since the served UEs have not initiated the link recovery procedure yet.

For this purpose, the relaying transmission configuration (e.g., related to a UE served by the NCR), can be assigned with a time threshold. If the NCR identifies the link failure and it successfully performs and accomplishes the link recovery procedure within the time threshold, the transmission configuration remains valid after the recovery.

In accordance with the above, in some embodiments, the NCR transceiver 820, in operation, performs the relaying (e.g. receiving and transmitting signals to be relayed) using the (existing) relay transmission configuration if the circuitry has accomplished the radio link recovery within a time interval equal to or smaller than a time threshold for radio link recovery, and the NCR circuitry 830, in operation, releases the relay transmission configuration if the circuitry has exceeded the time threshold for radio link recovery in performing the radio link recovery.

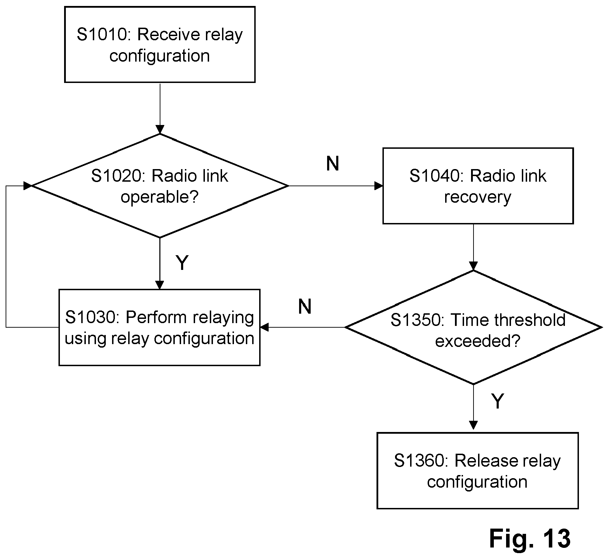

Correspondingly, as shown in **Fig. 13****,** the NCR method may include step S1350 of determining, during radio link recovery, whether the time threshold for radio link recovery has been exceeded. For instance, the NCR may maintain a timer which is started upon detection of radio link failure and which is compared to the time threshold for radio link recovery. If radio link recovery is accomplished within the time threshold, signals to be relayed are received and transmitted in accordance with step S1030, using the configured relay configuration as before radio link failure. If the time threshold has been exceeded, the NCR method proceeds to step S1360 of releasing the relay transmission configuration.

For instance, control signaling received by the relaying communication device 810 from the scheduling node include a configured time threshold, wherein the configured time threshold may be included in or associated with the relay transmission configuration. The NCR circuitry 830, in operation, may determine the time threshold for radio link recovery to be equal to or smaller than the configured time threshold.

For instance, the configured time threshold may be equal to or smaller that a UE's time threshold used in beam failure detection, for the NCR to be able to accomplish the radio link recovery before the UE has detected link failure.

Furthermore, to start link recovery sufficiently early before the UE detects a link failure, a count threshold for link failure instances to be used by the relay communication device 810 (a "relay count threshold", e.g. a count threshold for out-of-sync, maximum link or beam failure) may have a smaller value for the NCR than for the UE ("terminal count threshold"). The NCR (e.g. NCR circuitry 830) may maintain a counter counting link failure instances and compare the number of link failure instances that have occurred within a given time interval with the count threshold.

In some embodiments, the control signaling received from the scheduling node 860 includes a relay count threshold for a number of radio link failure instances at which radio link recovery is to be triggered by said communication device, and the NCR circuitry 830, in operation, triggers radio link recovery when a counter value indicating the number of radio link failure instances has reached (or exceeded) the relay count threshold. E.g. a test whether the counter value has reached or exceeded the relay count threshold may be made in NCR method step S1020. For instance, the relay count threshold may be configured by the above-mentioned parameter *beamFailurelnstanceMaxCount.*

When the NCR circuitry 830 has released the relay transmission configuration, the NCR transceiver 820 may transmit a signal indicating that the relay transmission configuration has been released. For instance, the signal may be transmitted to inform the gNB of the release, which, in turn may determine a new relay transmission configuration for the NCR.

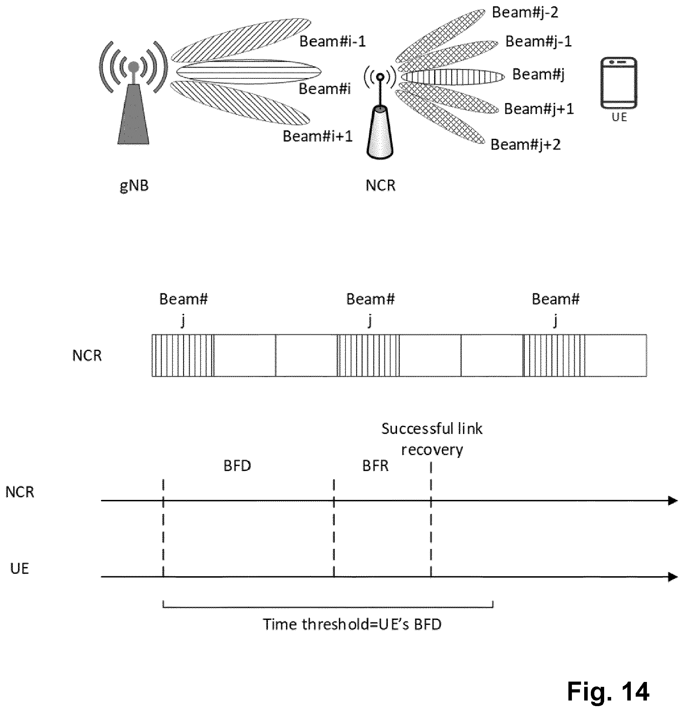

An example of applying a time threshold for a NCR's radio link recovery is shown in **Fig. 14****,** where the NCR is configured with a semi-static beam configuration for SPS or CG traffic of a UE. The beam configuration is associated with a time threshold and counter corresponding to the UE's beam failure detection time duration and counter. For instance, the time threshold corresponds to the UE's threshold for beam failure detection (BFD). The NCR performs the link recovery procedure for the control link. Since the NCR recovers the link within the above set threshold, the NCR beam configuration for SPS/CG traffic remains valid after the NCR link recovery procedure.

By providing the possibility of recovering the radio link within a time threshold, the present embodiments facilitate reducing signaling overhead, e.g. associated with reconfiguration. Moreover, the chance of massive UE link failures may be reduced.

### Release of relay configuration at UE's BFD/RLF

In the present embodiments, as in the aforementioned section of this disclosure, a transmission configuration is set with a time threshold. A transmission configuration is released by the NCR if the duration of the control link interruption (e.g. due to RLF (radio link failure) or BFR (beam failure recovery)) is greater than a time threshold. Optionally, the NCR informs the gNB that the transmission configuration is released.

However, in the present embodiments, the beam failure recovery or link recovery procedure for the control link could be triggered by the NCR_MT at a later time instant compared to that of a served UE. For instance, the UE may have URLLC traffic, and the link recovery procedure of the UE may be configured to be triggered quickly. In such case, the serving UE may initiate the link recovery procedure while the NCR still did not detect link failure. The UE may release its semi-static configurations, e.g., related to SPS/CG transmissions. It may then be desirable that NCR is able to release the related (relay) transmission configurations even though the NCR has not initiated the link recovery procedure.

For this purpose, a transmission configuration can be assigned with a time threshold and timer or counter. If the NCR is not able to recover the beam and/or link for the control link within the above set time threshold, the associated configuration may be released. Optionally, the NCR may inform the gNB that the transmission configuration is released.

In some embodiments, the control signaling indicates a terminal count threshold for a number of radio link failure instances at which radio link recovery is to be triggered by a terminal communication device. The NCR circuitry 830, in operation, releases the relay transmission configuration when a counter value indicating the number of radio link failure instances has reached or exceeded the terminal count threshold.

For instance, the NCR circuitry 830 may release the relay transmission configuration when counter value indicating the number of radio link failure instances has reached or exceeded the terminal count threshold within a terminal's timer threshold for determining radio link failure or beam failure.

As in the preceding section, when the NCR circuitry 830 has released the relay transmission configuration, the transceiver, in operation, may transmit, to the scheduling node 860, a signal indicating that the relay transmission configuration is released.

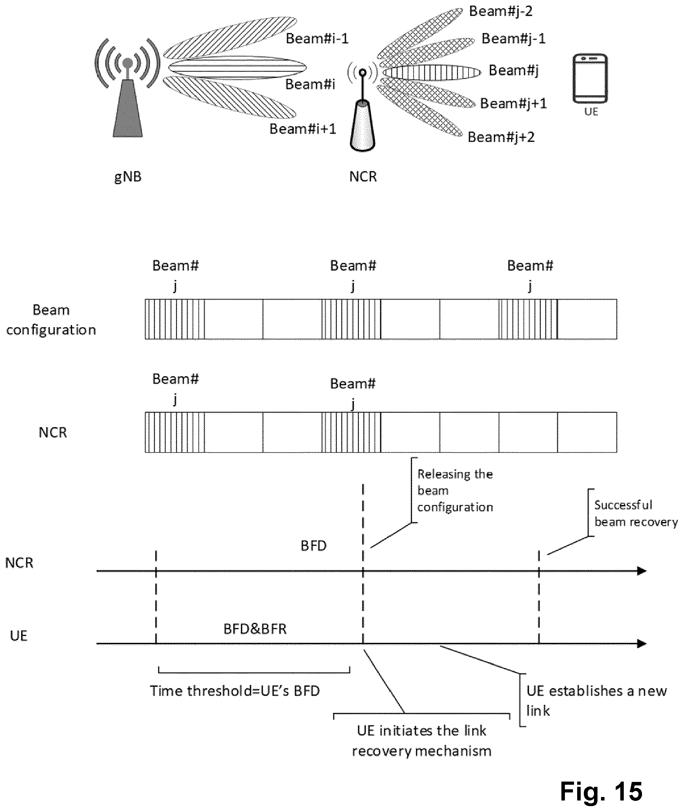

**Fig. 15** illustrates an example where the NCR is configured with a semi-static beam configuration to serve a UE SPS/CG traffic. The beam configuration is associated with a time threshold or count threshold equal to the UE's time threshold and/or count threshold for BFD. However, the NCR's count threshold for triggering the radio link recovery may be larger than the UE's count threshold. Accordingly, the NCR may detect beam failure instances for a duration longer than the UE's time threshold, and may detect radio link or beam failure only after the UE's detection of beam failure or radio ink failure. Although the NCR has not initiated the link recovery procedure, it releases the associated semi-static beam configuration. For instance, as shown in **Fig. 15**, the NCR releases the beam configuration at a time point when the UE initiates link recovery.

In accordance with the present embodiments, when the NCR releases the radio link configuration in accordance with the UE's triggering of radio link or beam recovery, the NCR does not amplify the UE's signal when the UE is in the link recovery procedure. Thereby, interference in the communication system may be reduced.

### Threshold signaling by gNB

On the side of the scheduling node 860, in some embodiments the gNB circuitry 880 determines, in addition to generating the relay transmission configuration, a plurality of count thresholds for a number of radio link failure instances. The plurality of count thresholds may include:
- a relay count threshold at which radio link recovery is to be triggered or the relay transmission configuration is to be released to be applied by a relaying communication device and
- at least one terminal count threshold at which radio link recovery is to be triggered, to be applied by a terminal communication device.

The gNB transceiver 870, in operation, transmits the relay transmission configuration and the plurality of count thresholds, and transmits signals to be relayed or receives relayed signals in accordance with the relay transmission configuration.

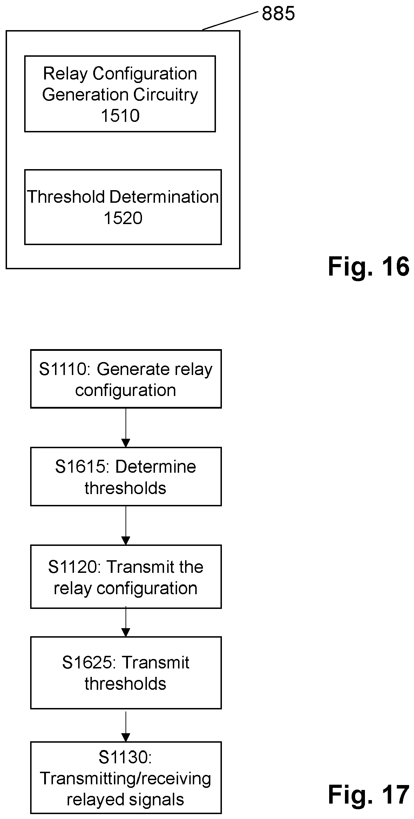

**Fig. 16** shows an exemplary structure of a scheduling node's relay configuration circuitry 885. The exemplary relay configuration circuitry includes relay configuration generation circuitry 1510, which may be responsible for generating a relay transmission configuration, and threshold determination circuitry 1520, which may be responsible for the determination of the above-mentioned plurality of count thresholds as well as of the time thresholds mentioned in the present disclosure.

Correspondingly, as shown in **Fig. 17**, in addition to the steps described with reference to **Fig. 11**, the gNB method may include a threshold determining step S1615 of determining threshold including plurality of count thresholds for a number of radio link failure instances. The plurality of count thresholds may include
- a relay count threshold at which radio link recovery is to be triggered or the relay transmission configuration is to be released to be applied by a relaying communication device, and
- at least one terminal count threshold at which radio link recovery is to be triggered, to be applied by a terminal communication device.

The method then includes a step S1625 of transmitting the determined thresholds.

For instance, the relay count threshold is transmitted to the relaying communication device 810, and the terminal count threshold is transmitted to one or more UEs transmitting or receiving signals to be relayed via communication device 810.

In some embodiments, the at least one terminal count threshold includes a first terminal count threshold larger than the relay count threshold. This corresponds, for example, to the embodiments described above in section "Time threshold for radio link recovery" with reference to **Fig. 14****.**

In addition to the plurality of count thresholds, the above-mentioned time threshold for radio link recovery may be generated (e.g. by gNB circuitry 870) and transmitted (e.g. by gNB transceiver 870), to be used by the relaying communication device 810 (e.g. an NCR) in combination with the relay count threshold to enable timely radio link recovery and reuse the existing relay transmission configuration if radio link recovery is accomplished within the time threshold..

In some embodiments, the at least one terminal count threshold includes a second terminal count threshold which may be equal to the relay count threshold at which the transmission configuration is to be released. This corresponds, for example, to the embodiments described above in section "Release of relay configuration at UE's BFD/RLF" with respect to **Fig. 15** where the NCR releases the relay transmission configuration at a time instance where the UE detects beam failure or radio link failure.

The first and the second terminal count threshold may be provided respectively, to a first UE or UEs and a second UE or UEs, e.g. combined in a single cell or a set of neighboring cells having a common relay configuration as described above. For instance, the second UE or UEs may include URLLC devices. Accordingly, the communication system may allow for balancing between avoidance of massive link failure and reduction of interference.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Aspects

According to a first aspect, provided is a communication device, comprising a transceiver which, in operation, receives control signaling indicating a relay transmission configuration and circuitry which, in operation, determines whether a radio link is operable, wherein, if the circuitry determines the radio link to be operable, the transceiver, in operation, receives signals to be relayed and transmits the received signals using the relay transmission configuration, and if the circuitry determines that a radio link failure has occurred, the circuitry, in operation, performs radio link recovery, and the transceiver, in operation receives the signals to be relayed and transmits the received signals using the relay transmission configuration after successful radio link recovery.

According to a second aspect, which may be provided in combination with the first aspect, the the relay transmission configuration is defined for a plurality of scheduling nodes including a first scheduling node and a second scheduling node, said radio link is a first radio link between the communication device and the first scheduling node, and when, in performing the radio link recovery, the communication device connects to the second scheduling node, the transceiver, in operation, receives the signals to be relayed and transmits the received signals using the relay transmission configuration after the successful radio link recovery.

According to a third aspect, which may be provided in combination with the second aspect, the relay transmission configuration indicates one or more of:
- a beamforming configuration,
- a configuration of time division duplex operation of an uplink and a downlink,
- on-off information indicating when the relay transmission operation of the communication device is to be turned on and off, or
- power control information.

According to a fourth aspect, which may be provided in combination with the third aspect, the relay transmission configuration includes, for each of the plurality of scheduling nodes, a respective resource offset, and when, in performing the radio link recovery, the communication device connects to the second scheduling node, the transceiver, in operation, applies the resource offset for the second scheduling node to the beamforming configuration when transmitting the received signals after the successful radio link recovery.

According to a fifth aspect, which may be provided in combination with any one of the first to fourth aspects, the transceiver, in operation, receives signals to be relayed and transmits the received signals using the relay transmission configuration if the circuitry has accomplished the radio link recovery within a time interval equal to or smaller than a time threshold for radio link recovery, and the circuitry, in operation, releases the relay transmission configuration if the circuitry has exceeded the time threshold for radio link recovery in performing the radio link recovery.

According to a sixth aspect, which may be provided in combination with the fifth aspect, the control signaling includes a configured time threshold, and the circuitry, in operation, determines the time threshold for radio link recovery to be equal to or smaller than the configured time threshold.

According to a seventh aspect, which may be provided in combination with the fifth or sixth aspect, the control signaling includes a relay count threshold for a number of radio link failure instances at which radio link recovery is to be triggered by said communication device, and the circuitry, in operation, triggers radio link recovery when a counter value indicating the number of radio link failure instances has reached the relay count threshold.

According to an eighth aspect, which may be provided in combination with any one of the first to fifth aspects, the control signaling indicates a terminal count threshold for a number of radio link failure instances at which radio link recovery is to be triggered by a terminal communication device, and the circuitry, in operation, releases the relay transmission configuration when a counter value indicating the number of radio link failure instances has reached the terminal count threshold.

According to a ninth aspect, which may be provided in combination with any one of the fifth to eighth aspects, when the circuitry has released the relay transmission configuration, the transceiver, in operation, transmits a signal indicating that the relay transmission configuration is released.

According to a tenth aspect, provided is a scheduling node, comprising: circuitry which, in operation, generates a relay transmission configuration and determines a plurality of count thresholds for a number of radio link failure instances, the plurality of count thresholds including a relay count threshold at which radio link recovery is to be triggered or the relay transmission configuration is to be released to be applied by a relaying communication device, and at least one terminal count threshold at which radio link recovery is to be triggered, to be applied by a terminal communication device and a transceiver which, in operation, transmits control signaling including the relay transmission configuration and the plurality of count thresholds

According to an eleventh aspect, which may be provided in combination with the tenth aspect, the transceiver, in operation, transmits signals to be relayed or receives relayed signals in accordance with the relay transmission configuration.

According to a twelfth aspect, which may be provided in combination with the tenth or eleventh aspect, the at least one terminal count threshold includes a first terminal count threshold larger than the relay count threshold.

According to a thirteenth aspect, which may be provided in combination with the twelfth aspect, the circuitry, in operation, determines a time threshold for radio link recovery to be applied by the relaying communication device, and the control signaling includes the time threshold for radio link recovery.

According to a fourteenth aspect, which may be provided in combination with any one of the tenth to thirteenth aspects, the at least one terminal count threshold includes a second terminal count threshold equal to the relay count threshold at which the transmission configuration is to be released.

According to a fifteenth aspect, which may be provided in combination with any one of the tenth to fourteenth aspects, the relay transmission configuration is defined for a plurality of scheduling nodes including said scheduling node.

According to a sixteenth aspect, which may be provided in combination with tenth to fifteenth aspects, the relay transmission configuration indicates one or more of:
- a beamforming configuration,
- a configuration of time division duplex operation of an uplink and a downlink,
- on-off information indicating when the relay transmission operation of the relaying communication device is to be turned on and off, or
- power control information.

According to a seventeenth aspect, which may be provided in combination with the sixteenth aspect, the relay transmission configuration includes, for each of the plurality of scheduling nodes, a respective resource offset.

According to an eighteenth aspect, which may be provided in combination with any one of the tenth to seventeenth aspects, when the transceiver receives a signal indicating that the transmission configuration is released, the circuitry, in operation, generates a reconfigured relay transmission configuration, the transceiver, in operation, transmits control signaling for reconfiguring the relaying configuration device in accordance with the reconfigured relay transmission configuration, and transmits the signals to be relayed or receives the relayed signals in accordance with the relay transmission configuration.

According to a nineteenth aspect, provided is a communication method, including the following steps to be performed by a communication apparatus: receiving control signaling indicating a relay transmission configuration; determining whether a radio link is operable, wherein, if the radio link is determined to be operable, the method includes: receiving signals to be relayed and transmitting the received signals using the relay transmission configuration, and if, it is determined that a radio link failure has occurred, the method includes: performing radio link recovery; and receiving the signals to be relayed and transmitting the received signals using the relay transmission configuration after successful radio link recovery.

According to a twentieth aspect, which may be provided in combination with the nineteenth aspect, the relay transmission configuration is defined for a plurality of scheduling nodes including a first scheduling node and a second scheduling node, said radio link is a first radio link between the communication device and the first scheduling node, and when, in in the step of performing the radio link recovery, the communication device connects to the second scheduling node, the method includes receiving the signals to be relayed and transmitting the received signals using the relay transmission configuration after the successful radio link recovery.

According to a twenty-first aspect, which may be provided in combination with the twentieth aspect, the relay transmission configuration indicates one or more of:
- a beamforming configuration,
- a configuration of time division duplex operation of an uplink and a downlink,
- on-off information indicating when the relay transmission operation of the communication device is to be turned on and off, or
- power control information.

According to a twenty-second aspect, which may be provided in combination with the twenty-first aspect, the relay transmission configuration includes, for each of the plurality of scheduling nodes, a respective resource offset, and when, in the step of performing the radio link recovery, the communication device connects to the second scheduling node, the method includes applying the resource offset for the second scheduling node to the beamforming configuration when transmitting the received signals after the successful radio link recovery.

According to a twenty-third aspect, which may be provided in combination with any one of the nineteenth to twenty-second aspects, the step of receiving the signals to be relayed and transmitting the received signals using the relay transmission configuration is performed if the radio link recovery has been accomplished within a time interval equal to or smaller than a time threshold for radio link recovery, and the method includes releasing the relay transmission configuration if the time threshold for radio link recovery in performing has been exceeded in performing the radio link recovery.

According to a twenty-fourth aspect, which may be provided in combination with the twenty-third aspect, the control signaling includes a configured time threshold, and the method includes determining the time threshold for radio link recovery to be equal to or smaller than the configured time threshold.

According to the twenty-fifth aspect, which may be provided in combination with any one of the twenty-third or twenty fourth aspects, the control signaling includes a relay count threshold for a number of radio link failure instances at which radio link recovery is to be triggered by said communication device, and the method includes triggering the radio link recovery when a counter value indicating the number of radio link failure instances has reached the relay count threshold.

According to a twenty-sixth aspect, which may be provided in combination with any one of the nineteenth to twenty-third aspects, the control signaling indicates a terminal count threshold for a number of radio link failure instances at which radio link recovery is to be triggered by a terminal communication device, and the method includes releasing the relay transmission configuration when a counter value indicating the number of radio link failure instances has reached the terminal count threshold.

According to a twenty-seventh aspect, which may be provided in combination with any one of the twenty third to twenty-sixth aspects, the method includes, when the relay transmission configuration is released, transmitting a signal indicating that the relay transmission configuration has been released.

According to a twenty-eighth aspect, provided is a communication method including the following steps to be performed by a scheduling node: generating a relay transmission configuration; determining a plurality of count thresholds for a number of radio link failure instances, the plurality of count thresholds including a relay count threshold at which radio link recovery is to be triggered or the relay transmission configuration is to be released to be applied by a relaying communication device, and at least one terminal count threshold at which radio link recovery is to be triggered, to be applied by a terminal communication device; and transmitting control signaling including the relay transmission configuration and the plurality of count thresholds.

According to a twenty-ninth aspect, which may be provided in combination with the twenty-eighth aspect, the method includes transmitting signals to be relayed or receiving relayed signals in accordance with the relay transmission configuration.

According to a thirtieth aspect, which may be provided in combination with the twenty-eighth or twenty-ninth aspect, the at least one terminal count threshold includes a first terminal count threshold larger than the relay count threshold.

According to a thirty-first aspect, which may be provided in combination with the thirtieth aspect, the method includes determining a time threshold for radio link recovery to be applied by the relaying communication device, wherein, in the step of transmitting control signaling, the control signaling includes the time threshold for radio link recovery.

According to a thirty-second aspect, which may be provided in combination with any one of the twenty-eighth to thirty-first aspects, the at least one terminal count threshold includes a second terminal count threshold equal to the relay count threshold at which the transmission configuration is to be released.

According to a thirty-third aspect, which may be provided in combination with any one of the twenty-eighth to thirty-second aspects, the relay transmission configuration is defined for a plurality of scheduling nodes including said scheduling node.

According to a thirty-fourth aspect, which may be provided in combination with any one of the twenty-eighth to thirty-third aspects, the relay transmission configuration indicates one or more of:
- a beamforming configuration,
- a configuration of time division duplex operation of an uplink and a downlink,
- on-off information indicating when the relay transmission operation of the relaying communication device is to be turned on and off, or
- power control information.

According to a thirty fifth aspect, which may be provided in combination with the thirty fourth aspect, the relay transmission configuration includes, for each of the plurality of scheduling nodes, a respective resource offset.

According to a thirty-sixth aspect, which may be provided in combination with any one of the twenty-eighth to thirty-fifth aspects, the method includes, when a signal indicating that the transmission configuration is released, is received: generating a reconfigured relay transmission configuration, and transmitting control signaling for reconfiguring the relaying configuration device in accordance with the reconfigured relay transmission configuration; and transmitting the signals to be relayed or receives the relayed signals in accordance with the relay transmission configuration.

According to a thirty-seventh aspect, provided is an integrated circuit which, in operation, causes a communication apparatus to carry out the steps of the communication method according to any one of the nineteenth to twenty-seventh aspects.

According to a thirty-eighth aspect, provided is an integrated circuit which, in operation, causes a scheduling node to carry out the steps of the communication method according to any one of the twenty-eighth to thirty-sixth aspects.

According to a thirty ninth aspect, a program stored on a (non-transitory) storage medium and including code instructions, which, when executed on one or more processors of a communication device, cause the one or more processors to execute the steps of any of the nineteenth to twenty-seventh aspects.

According to a thirty ninth aspect, a program stored on a (non-transitory) storage medium and including code instructions, which, when executed on one or more processors of a scheduling node, cause the one or more processors to execute the steps of the twenty-eighth to thirty-sixth aspects.

## Claims

1. A communication device, comprising:
a transceiver which, in operation, receives control signaling indicating a relay transmission configuration and
circuitry which, in operation, determines whether a radio link is operable,
wherein, if the circuitry determines the radio link to be operable,
the transceiver, in operation, receives signals to be relayed and transmits the received signals using the relay transmission configuration, and
if the circuitry determines that a radio link failure has occurred,
the circuitry, in operation, performs radio link recovery, and
the transceiver, in operation receives the signals to be relayed and transmits the received signals using the relay transmission configuration after successful radio link recovery.

2. The communication device according to claim 1, wherein the relay transmission configuration is defined for a plurality of scheduling nodes including a first scheduling node and a second scheduling node, said radio link is a first radio link between the communication device and the first scheduling node, and
when, in performing the radio link recovery, the communication device connects to the second scheduling node, the transceiver, in operation, receives the signals to be relayed and transmits the received signals using the relay transmission configuration after the successful radio link recovery.

3. The communication device according to claim 2, wherein the relay transmission configuration indicates one or more of:
- a beamforming configuration,
- a configuration of time division duplex operation of an uplink and a downlink,
- on-off information indicating when the relay transmission operation of the communication device is to be turned on and off, or
- power control information.

4. The communication device according to claim 3, wherein the relay transmission configuration includes, for each of the plurality of scheduling nodes, a respective resource offset, and
when, in performing the radio link recovery, the communication device connects to the second scheduling node, the transceiver, in operation, applies the resource offset for the second scheduling node to the beamforming configuration when transmitting the received signals after the successful radio link recovery.

5. The communication device according to any one of claims 1 to 4, wherein
the transceiver, in operation, receives signals to be relayed and transmits the received signals using the relay transmission configuration if the circuitry has accomplished the radio link recovery within a time interval equal to or smaller than a time threshold for radio link recovery, and
the circuitry, in operation, releases the relay transmission configuration if the circuitry has exceeded the time threshold for radio link recovery in performing the radio link recovery.

6. The communication device according to claim 5, wherein the control signaling includes a configured time threshold, and
the circuitry, in operation, determines the time threshold for radio link recovery to be equal to or smaller than the configured time threshold.

7. The communication device according to claim 5 or 6, wherein the control signaling includes a relay count threshold for a number of radio link failure instances at which radio link recovery is to be triggered by said communication device, and
the circuitry, in operation, triggers radio link recovery when a counter value indicating the number of radio link failure instances has reached the relay count threshold.

8. The communication device according to any one of claims 1 to 5, wherein the control signaling indicates a terminal count threshold for a number of radio link failure instances at which radio link recovery is to be triggered by a terminal communication device, and the circuitry, in operation, releases the relay transmission configuration when a counter value indicating the number of radio link failure instances has reached the terminal count threshold.

9. The communication device according to any one of claims 5 to 8, wherein, when the circuitry has released the relay transmission configuration, the transceiver, in operation, transmits a signal indicating that the relay transmission configuration is released.

10. A scheduling node, comprising:
circuitry which, in operation, generates a relay transmission configuration and determines a plurality of count thresholds for a number of radio link failure instances, the plurality of count thresholds including
a relay count threshold at which radio link recovery is to be triggered or the relay transmission configuration is to be released to be applied by a relaying communication device, and
at least one terminal count threshold at which radio link recovery is to be triggered, to be applied by a terminal communication device; and
a transceiver which, in operation, transmits control signaling including the relay transmission configuration and the plurality of count thresholds.

11. The scheduling node according to claim 10, wherein the at least one terminal count threshold includes a first terminal count threshold larger than the relay count threshold.

12. The scheduling node according to claim 11, wherein the circuitry, in operation, determines a time threshold for radio link recovery to be applied by the relaying communication device, and
the control signaling includes the time threshold for radio link recovery.

13. The scheduling node according to any one of claims 10 to 12, wherein the at least one terminal count threshold includes a second terminal count threshold equal to the relay count threshold at which the transmission configuration is to be released.

14. A communication method, including the following steps to be performed by a communication apparatus:
receiving control signaling indicating a relay transmission configuration;
determining whether a radio link is operable,
wherein, if the radio link is determined to be operable, the method includes:
receiving signals to be relayed and transmitting the received signals using the relay transmission configuration, and
if, it is determined that a radio link failure has occurred, the method includes:
performing radio link recovery; and
receiving the signals to be relayed and transmitting the received signals using the relay transmission configuration after successful radio link recovery.

15. A communication method including the following steps to be performed by a scheduling node:
generating a relay transmission configuration;
determining a plurality of count thresholds for a number of radio link failure instances, the plurality of count thresholds including
a relay count threshold at which radio link recovery is to be triggered or the relay transmission configuration is to be released to be applied by a relaying communication device, and
at least one terminal count threshold at which radio link recovery is to be triggered, to be applied by a terminal communication device; and
transmitting control signaling including the relay transmission configuration and the plurality of count thresholds.
